(19) Europäisches Patentamt
European Patent Office
Office européen des brevets

(11) **EP 3 531 622 B1**

(12) **EUROPEAN PATENT SPECIFICATION**

(45) Date of publication and mention
of the grant of the patent:
**08.01.2020 Bulletin 2020/02**

(51) Int Cl.:
***H04L 12/24*** *(2006.01)*

(21) Application number: **18461520.1**

(22) Date of filing: **23.02.2018**

(54) **METHOD OF HANDLING PACKET FLOW IN SOFTWARE-DEFINED NETWORK, COMPUTER PROGRAM PRODUCT, AND SOFTWARE-DEFINED NETWORK**

VERFAHREN ZUM HANDHABEN EINES PAKETFLUSSES IN EINEM SOFTWAREDEFINIERTEN NETZWERK, COMPUTERPROGRAMMPRODUKT UND SOFTWAREDEFINIERTES NETZWERK

PROCÉDÉ DE GESTION DE FLUX DE PAQUETS DANS UN RÉSEAU DÉFINI PAR LOGICIEL, PRODUIT_PROGRAMME INFORMATIQUE ET RÉSEAU DÉFINI PAR LOGICIEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.08.2019 Bulletin 2019/35**

(73) Proprietor: **Akademia Gorniczo-Hutnicza im. Stanislawa Staszica w Krakowie 30-059 Krakow (PL)**

(72) Inventors:
• **Borylo, Piotr**
  **31-416 Kraków (PL)**
• **Lasón , Artur**
  **31-871 Kraków (PL)**
• **Rzepka, Michal**
  **31-944 Kraków (PL)**

(74) Representative: **Bury, Marek Bury & Bury UI. Przyczolkowa 124 02-968 Warszawa (PL)**

(56) References cited:
**EP-A1- 2 665 229        EP-B1- 3 175 582 US-A1- 2017 085 501**

• **TROIS CELIO ET AL: "A Survey on SDN Programming Languages: Toward a Taxonomy", IEEE COMMUNICATIONS SURVEYS & TUTORIALS, vol. 18, no. 4, 18 November 2016 (2016-11-18), pages 2687-2712, XP011634925, DOI: 10.1109/COMST.2016.2553778 [retrieved on 2016-11-18]**

EP 3 531 622 B1

**Description**

The object of the invention is a method of handling packet flow in software-defined network, SDN, computer program product, and software-defined network.

The concept of Software-Defined Networking is based on decoupling of network control layer and data switching layer. The control layer comprises so-called controller, being logically centralized software, with task of making decisions determining rules of switching traffic in the network. Next, the rules are passed to SDN switches, which form the data switching layer. While the traffic handling logic is implemented in the controller, the only task of the switches is to implement the developed rules and physical transport of packets between the input port and the output port derived from a rule. In context of SDN one should also define the term of flow, denoting sequence of packet data identified based on selected header fields in carried data. In classic approach, flow is identified by source and destination IP addresses, source and destination ports, and used transport layer protocol. In turn, the method of routing a packet, i.e. determination of its route between points within the network, is denoted as routing policy.

An existing protocol of communication between control layer and data switching layer in SDN is OpenFlow.

OpenFlow protocol is currently one of the most popular implementations of the SDN concept. The key element of protocol specification are definitions of message formats and requirements set for compatible devices. This specification defines the most important elements of SDN and related terms used in the description of embodiment herein. "SDN Controller" is the central point of the network, making decisions on the method of handling specific flows and communicating them to SDN switches using OpenFlow protocol. "SDN Switch" - a network device compatible with OpenFlow protocol, adapted to processing, storing, and executing instructions received from SDN controller.

Retaining satisfactory quality of services faces some challenges in networks with dynamically changing traffic handling policies. In particular cases it is necessary to change policy for new flows with particular characteristics without affecting the method of handling current flows of the same type. Keeping entries for each flow is costly due to storing and searching them, while using aggregated entries does not allow for detailed traffic control and makes network monitoring process more difficult, because any actions and observations are possible only with the precision of aggregated entries. Real-time traffic handling by controller has adverse impact on performance. In particular, this pertains to moment of appearance of a new flow, when, with default behaviour, it is necessary to wait for controller response before handling the flow. The problem is also related to the method of storing entries in flow tables of SDN switches, and the method of searching them. According to OpenFlow standard, they can be located in one table or several separate tables - this feature is available in most software SDN switches. There are commercially available software solutions with performance comparable to typical hardware switches.

According to fundamental assumptions, SDNs are aimed to eliminate some key problems encountered during administrating modern computer networks. Difficulties in managing ICT systems inter alia result from permanently increasing number of nodes with autonomous character and complicated structure of connections. Such constructed networks have low flexibility, and their configuration becomes a laborious and demanding in terms of resources. It is also difficult to monitor the state of individual elements of the system, and to efficiently respond to varying demands of users and occurring failures.

U.S. Patent No. US8964751 granted for invention entitled SYSTEM AND METHOD FOR STORING FLOW ENTRIES IN HARDWARE TABLES discloses method of handling packet flow in SDN provided with controller and switch with flow table, the entries of which define method of handling packets, and which method applies distinction of detailed entries and aggregated entries formed with use of wildcards. Flows handled according to defined rules stored in an aggregated entry are called traffic aggregates. SDN controller uses reactive mechanisms for handling packets from new flows. A similar solution has been disclosed also in European Patent EP3175582B1 for invention entitled AUTOMATED FLOW DEVOLVEMENT IN AN AGGREGATE FLOW ENVIRONMENT. TROIS CELIO ET AL: "A Survey on SDN Programming Languages: Toward a Taxonomy", IEEE COMMUNICATIONS SURVEYS & TUTORIALS, vol. 18, no. 4 , pages 2687-2712, XP011634925, DOI:10.1109/COMST.2016.2553778 disclose SDN Architecture with SDN controller that manages in a hybrid proactive and reactive manner the switches flow tables by adding, modifying, or removing their entries including a field defining priority and using wildcard for aggregation. It uses windowed query to collect information regarding statistics of the traffic minutely. European patent no EP 3 175 582 discloses designating the microflow entry a higher flow matching priority than a flow matching priority associated with the aggregate flow entry.

A drawback of state-of-the-art solutions is that the first packets of a new flow appearing in a switch experience additional latency due to the necessity of establishing new entries corresponding to the new flow. This results in significant latency in handling first packets of a new flow, what e.g. can adversely affect parameters of established TCP sessions or packet loss in case of UDP transmission.

The object of the invention is solution of the aforementioned problems related to existing state-of-the-art solutions and acceleration of handling new flows in SDN.

The method of handling packet flow in SDN comprising a server with SDN controller, and SDN switch with a flow table comprising detailed entries defining parameters necessary for assigning a packet to data flow and a field defining priority, wherein the detailed entries are included in corresponding aggregated entries prepared in advance to define routing policy commencing flow handling in a time window having a defined length, according to the invention is characterized in that the length of predefined window is at least two hours, the SDN controller acquires from SDN switch data related to flow statistics for entries installed in flow tables. An incoming packet belonging to a new flow is being sent to the controller while simultaneously SDN switch is handling it according to the corresponding aggregated entry, while the controller defines, by means of a reactive mechanism, a new detailed entry corresponding to this flow. Further, the controller proactively modifies the aggregated entries intended to be used to define routing policy in the next time window, using an static optimisation of an objective function including at least one criterion selected in a group including energy consumption, sum of delays on all network links, the maximal delay among all the network links, total utilization of resources for all network links, the maximal utilization of resources among all the network links, based on data related to flow statistics, wherein the aggregated entries have assigned lower priorities than the detailed entries. Such solution allows to eliminate latencies in handling of the first packets in a new flow, due to simultaneous handling and defining their detailed entries. At the same time, the amount of memory needed for storing detailed entries is limited.

Preferably, SDN switch comprises first flow table comprising aggregated entries, and at least one auxiliary flow table comprising detailed entries. Using multiple tables facilitates organizing entries and allows to use different types of memories for aggregated entries and detailed entries. This is advantageous, because the frequency of accessing differs significantly for these entries.

Preferably, detailed entries corresponding to given aggregated entry in flow table are located in a separate auxiliary table corresponding to the aggregated entry, wherein the auxiliary table further comprises a default entry. Such configuration provides possibility to accelerate searching in tables during assigning packets to flow.

Preferably, historic data related to flow statistics in subsequent time windows are stored in server memory, and the length of time window is optimized in a separate process with use of the historic data. Such solution allows to adapt the window length to specifics of a network, which can vary seasonally.

Preferably, static optimization of flow table for window having a defined length is performed in the closest preceding window having the same length. Therefore, the risk of duration of short window preceding a long window being insufficient for performing optimization is limited.

Software Defined Network, SDN network comprising a server with controller and at least one SDN switch with flow table according to the invention has a controller adapted for executing the method according to the invention.

Preferably, the flow table in a switch is stored in ternary content-addressable memory, TCAM memory providing quick access.

Computer program product adapted for the function of SDN controller comprises a set of instructions, which loaded to the server memory cause the execution of the method according to the invention.

Embodiments of the invention has been described below with reference to the attached drawings, wherein Fig. 1 shows schematically a simple SDN, Fig. 2 shows schematically a method of handling a packet in the first embodiment of the method according to the invention, Fig. 3 shows the structure of a program implementing the method of the invention, and Fig. 4 shows schematically a method of handling a packet in an alternative embodiment of the method according to the invention.

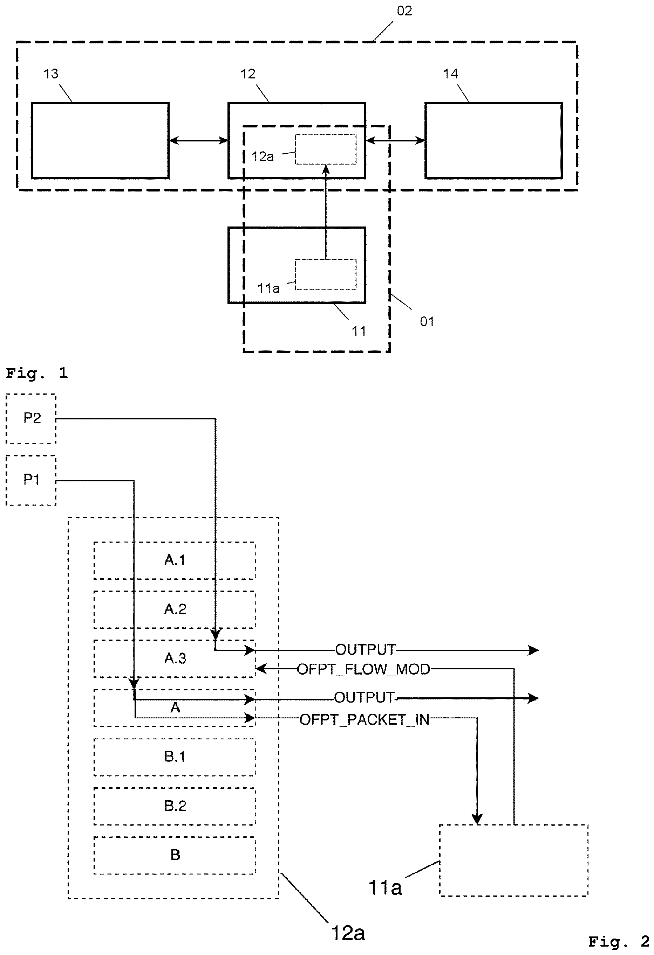

SDN architecture is based on decoupling of control plane 01 from data plane 02, and transfer of all mechanisms related to control plane 01 to a central point of the network - the controller 11a run on server 11. A simple network design according to this doctrine is shown in Fig. 1. It presents SDN controller 11a and SDN switch 12 with flow table 12a configured by the SDN controller 11a. The SDN switch 12 communicates with other switches 13, 14 in the network. Communication between the controller and switches is performed according to OpenFlow protocol, which has been used for the purpose of illustrating the embodiments of the invention. In particular, the embodiments have been prepared for particular version OpenFlow 1.3.

In control plane decisions related to handling traffic are made, and delivered to network nodes, such as switch 12, the role of which is reduced to executing instructions received from the SDN controller. An important element of the control plane are the algorithms defining policies of handling the processed flows, and communication interfaces used for exchanging data with network devices and external applications and sources of information. The data plane comprises elements of network device responsible for data transmission, such as network interfaces, queues, buffers, and also mechanisms of packet header analysis and modification.

Communication between SDN switch 12 and SDN controller 11a requires establishing OpenFlow session. By default, the first step is establishing of TCP connection, additionally the messages can be protected with the use of TLS protocol. Next, messages OFPT_HELLO are exchanged, which help both parties to determine the used OpenFlow version and verify the correct state of the transmission channel. Completion of the negotiation enables free exchange of messages of other types. Retrieving by the controller information about features supported by the switch is possible due to exchange of messages OFPT_FEATURES_REQUEST and OFPT_FEATURES_REPLY. In order to facilitate cooperation of each of devices with the controller, the switch has a unique parameter Datapath ID, which enables its unique identification.

The role of SDN switch 12 is to store in flow table 12a entries installed by controller and to apply proper actions when handling packet corresponding to one of entries. Entries in flow table 12a comprise inter alia priority, statistics, and list of actions, e.g. operations of header field modification or packet transfer to output port. The key element of an entry is a match field, defining parameters of packet belonging to the defined flow. Usually these are values of selected header fields, e.g. destination MAC addresses or ToS field value of an IP packet. In the moment of packet reception the matching entry with the highest priority is sought in the flow table, the actions of the entry are applied to the packet. In some switches a packet can be forwarded for processing in a subsequent table comprising a different set of entries. If packet is not matched by any of the entries a default action is applied, the action usually directs the packet of a new flow to the controller. A simplified schematics showing handling multiple flows, searching in tables of a switch and application of action sending a packet to an output port is shown in Fig. 2.

SDN controller 11a installs in a flow table 12a of a switch 12 entries defining target actions for processed flows. Modification of a flow table is done by sending a message of OFPT_FLOW_MOD type. In this embodiment this process is initiated by the controller itself in case of aggregated entries - proactive installation of entries preceding appearance of flows, or in response to OFPT_PACKET_IN message sent by a switch in case of receiving a packet not matching any of currently stored entries - reactive installation of entries after appearance of a particular flow. The controller can also request, by OFPT_PACKET_OUT message, the switch to send a packet of any content from a selected output port.

OpenFlow protocol enables simultaneous defining and using entries with different MATCH fields, defining the characteristics of matching flow. In case when packet can be matched by more than one entry, the result of classification is determined by entries priorities. This mechanism allows creation of entries aggregating multiple flows, and simultaneously, with using properly chosen values of priorities and optional distribution of entries in tables, design of multilevel procedure of packet processing.

Instruction causing transfer of packet to the controller is, according to assumptions, used in case of lack of entries corresponding to the received packet, and further analysis is necessary to decide about method of handling a new flow. In this embodiment such action is included in entry of type TABLE MISS having the lowest priority in the table, but it can be also assigned to other entries. Proper use of these functions of OpenFlow protocol enables efficient network traffic management, providing reliability of services, and the possibility of responding to variations of user demands.

It is possible to aggregate at least some of existing flows, by using, for example, a common route for packet streams with the same destination IP address. According to the invention such entries are prepared in advance before commencing handling flows in a time window having a predefined length - in this embodiment 4 hours. The inventors have noticed, that time windows having length from 3 to 8 hours, usually around half of working day, allow, at a long time of traffic observation, for an efficient optimisation of aggregated entries prepared for subsequent time windows. This optimisation provides a proactive mechanism of preparing aggregated entries. Aggregated entries are prepared based on optimisation mechanism and algorithms. These optimisation algorithms operate cyclically, i.e. during one time window determine the recommended mode of handling flows in incoming time windows. This means, that in the considered network there are possible periodic changes of traffic policy related to new flows matching existing aggregated flows. Such optimisation is performed based on current state of the network, predicted state of the network in incoming time window being the result of the prediction process, and information obtained from applications using the network, for example related to expected mass event, which can distort normal operation of the network. In the same time, it is recommended to retain the policy of handling for already existing flows. This applies both to the moment of periodic change of routing policies, as well as potential modification of policies for flows being already handled in the network according to detailed entries. It is also desired to minimize the involvement of the controller in making decisions related to actions for flows in order to avoid overloading it with control traffic and eliminate latency related to handling the first packets of a new flow.

Newly appearing flows not matching the optimized aggregated entries are handled reactively, by creation of detailed entries - having a higher priority.

In the description below the following notation is used

P1 - the first packet belonging to a flow;

P2, P3, ... - subsequent packets belonging to the flow;

A, B, ... - aggregated entries in flow table corresponding to aggregated group of flows;

A.1, A.2, ... - detailed entries in flow table comprised by the aggregated entry A.

Let us consider purely reactive flow handling. With such handling, for each observed flow there would be created a new entry, and the entries would be in a single table. An incoming packet P1, belonging to a new flow, does not match any of the existing entries having a higher priority and, according to the action stored in TABLE MISS entry, it is forwarded to the controller in OFPT_PACKET_IN message. The controller decides about the proper action for the new flow, and using OFPT_FLOW_MOD message adds a new entry to the flow table. Packets P2, P3 and the next ones match the newly created entry and are handled according to the assigned action without intervention of the controller. This type of reactive approach to installing entries warrants both an easy modification of policies for incoming flows (action defined by the controller online during analysis of a new flow) and retaining policies for already defined flows (actions permanently stored in entries until their expiration). However, it is necessary for switch to communicate with the controller before creation of new entry for any of new flows, what can cause significant latency in establishing of transmission, especially in case when controller is heavy loaded.

Let us consider a purely proactive flow handling. In the flow table there are kept only the entries created proactively and defining actions for aggregated entries. In this case, a belonging to a new flow packet P1 received by a switch is matched based on header fields to an aggregated entry A defining a common action and handled immediately according to the stored instructions. Packets P2, P3, and the next ones belonging to the same flow are handled the same way. Purely proactive approach to handling flows allows to minimize the latency related to exchange of OpenFlow messages before establishing each flow. Placing the aggregated entries in a flow table also allows to significantly restrict the size of the table, what can facilitate traffic management and monitoring in some cases. However, in case of modification of handling policy for a given aggregated entry, it is not possible to keep the actions applied for already existing data streams, what can result in temporary disruption of transmission. Bypassing the controller completely in handling new flows requires also to proactively install in a flow table entries comprising all the prospected traffic , what is not always feasible and involves the risk of refusal of handling in case of imposing limits on memory, or significant growth of flow tables otherwise.

According to the invention the proactive and reactive approaches are combined in a way allowing to limit memory usage, reduce time of memory lookup, and accelerate handling new flows. To eliminate the latency related to establishing the transmission, both aggregated entries, created in a proactive way, as well as detailed entries , prepared reactively, are used. Distribution of entries and steps of processing the received packets are shown in Fig. 2. In a single flow table 12a all the entries A, A.1, A.2, ... are included in groups corresponding to subsequent aggregated entries in the order defined by means of priorities. In each group there are higher priority detailed entries A.1, A.2, ... matching detailed flows, preceding the aggregated entry A default for the aggregate comprising those detailed flows. The aggregated entry A, comprises an additional action forwarding a packet to a port, OFPP_CONTROLLER, resulting in sending the matched packet to the controller 11a as well as basic actions defined by the controller 11a for the whole traffic aggregate, e.g. forwarding a packet to an output port defined in a proactive way and as a result of static optimisation algorithms.

In the moment of reception, packet P1 belonging to a new flow is compared in sequence to entries A.1, A.2, ... in the order of priorities - starting with the highest. Due to lack of match, a subsequent comparison to entry A is performed successfully. The packet is handled immediately according to the set of actions assigned to the entry. At the same time, the instruction resulting in forwarding the packet in OFPT_PACKET_IN message to the controller 11 is applied, and default instructions for the aggregate, such as sending the packet to one of the output ports, the port is determined based on static optimisation mechanisms taking into account the current state of the network, predictions related to future, and information obtained from network applications. The controller 11a decides about the method of handling the new flow in the reactive way based on dynamic optimisation mechanisms. Using OFPT_FLOW_MOD message the controller adds to the flow table in proper location the detailed entry A.3. P2, P3 and the next packets of the flow processed in the analogous way are matched by the new entry A.3 and handled with no further involvement of the controller. The actions assigned to the new entry can indicate any output port defined reactively based on dynamic optimisation. This way it is possible to modify the default method of handling a new flow without interfering the already handled flows.

Due to expanding the list of actions in an aggregate entry the latency of handling the first packets is reduced, because latency caused by communication with the controller 11a is eliminated. In order to modify the policy for new flows it is only required to modify entry A. The already existing data streams are handled by entries A.1, A.2, ..., which are more detailed with respect to entry A and have a higher priority. As a result, they retain the current actions, what prevents modifications in policies of handling and disruption of traffic. For implementation of the method in the controller 11a there are implemented mechanisms assigning proper priorities to entries each time when a new detailed entry is added, such that distribution of entries in groups is kept.

Implementation of the method is an extension of Ryu controller used as the SDN controller 11a. The Ryu controller has been implemented in Python programming language. The implementation of the extension involves creation, in a separate module, a class called the controller application. This class, being an extension of class ryu.base.app_manager.RyuApp, is responsible for the initial configuration of the system and handling network events:

```
class CustomApp(app_manager.RyuApp):
OFP_VERSIONS = [ofproto_v1_3.0FP_VERSION]
def _init_(self, *args, **kwargs):
super(CustomApp, self)._init_(*args, **kwargs)
```

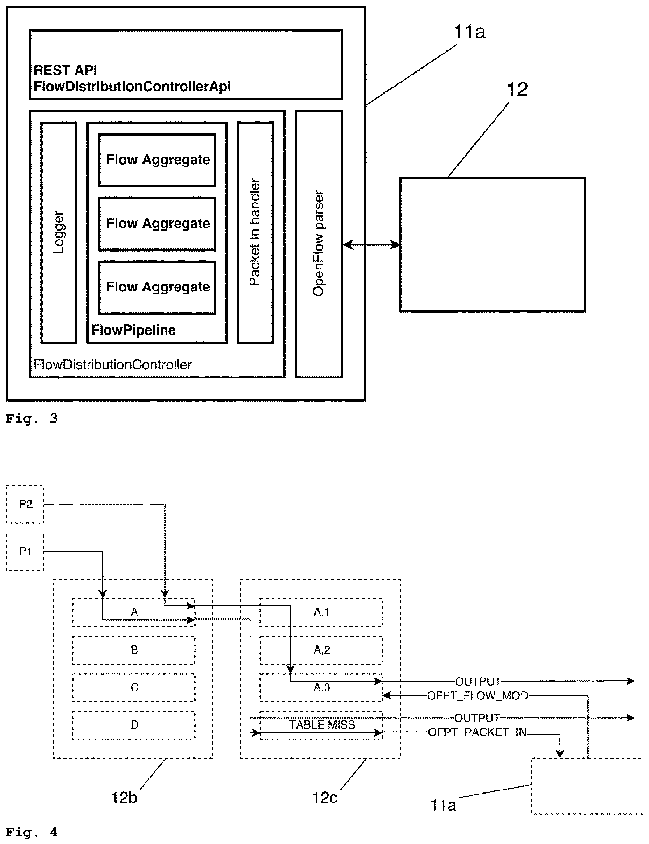

The code of the application managing distribution of entries in flow tables comprises elements corresponding to the used functions of OpenFlow protocol and the switch, and to the communication interface. There have been implemented classes corresponding to configurable traffic aggregates and set of entries present in the table of the switch. The structure of the application is shown in Fig. 3. The key components of the application are:

- FlowDistributionController - the main class of the application, responsible for handling network events and communication with the switch;
- FlowDistributionControllerApi - class implementing REST API interface used for configuration of the application;
- FlowAggregate - class representing traffic aggregate defined by the user, including its match and actions;
- FlowPipeline - class representing set of rules present in the table of the switch.

In Ryu controller application events are handled by dedicated methods. The methods are wrapped by proper decorators defined in modules ryu.topology.event and ryu.controller.ofp_event. Implementation of such method allows to create mechanisms taking action in case of occurrence of particular events in the network. The methods take as arguments objects storing data related to the event, for example, received packet header fields or flow statistics. Handling of two events has been implemented:

- @set_ev_cls(ryu.controller.ofp_event.EventOFPPacketIn, MAIN_DISPATCHER) - handling of event PACKET IN caused by the switch forwarding a packet to the controller.

- @set_ev_cls(ryu.controller.ofp_event.EventOFPSwitchFea tures, CONFIG_DISPATCHER) - handling of received message SWITCH FEATURES comprising information about parameters of the switch, the final step of establishing connection between the switch and the controller.

Modification of contents of flow table 12a is one of the fundamental operations performed by the application. It requires sending to the switch an OpenFlow protocol message of type OFPT_FLOW_MOD. It can comprise parameters such as priority of the entry, flow match and actions, and type of the operation, for example insertion or removal. Generation of OFPT_FLOW_MOD message in Ryu switch is based on creation of objects of classes OFPInstructionActions and OFPMatch, respectively corresponding to requested instructions for a given flow and its match. These objects are next used during creation of object of class OFPFlowMod representing a message ready to be sent. To facilitate the process method add_flow has been implemented in the application, responsible for creation of valid message and sending it to the switch.

The application uses the term aggregate denoting a set of flows defined by means of a common parameter, for example, the same destination IP address. Multiple flows can be comprised by one aggregate, for example, characterised by the same description IP address, but different destination TCP port numbers. The purpose of an aggregate in the implemented application and developed algorithms is to define policy of handling multiple flows by the use of only one entry. In the created application a traffic aggregate is represented by FlowAggregate class. It has attributes defining match, actions and unique identifier used during distribution of entries in a table. Both actions, as well as match are stored in according to the format used by ryu.app.ofctl_rest module:

```
{
        "ipv4_src": "192.168.0.1",
}"eth_type": 0x0800
[
        {
                "type":"OUTPUT",
        }"port": 1
]
```

what allows to use the mechanisms implemented in the controller 11a for processing and verification of input data from the user.

When user defines a new aggregate the active mode of application's operation may require adding to flow table 12a of the switch an entry created based on specified parameters. For this purpose the described above add_flow method is called. According to requirements of OpenFlow specification, using certain field for matching requires previous definition of values of other fields. The most frequent case is the necessity to define value of EtherType field of Ethernet protocol when using third layer fields and the value of Protocol field of IPv4 protocol when using fourth layer fields.

The set of user-defined traffic aggregates is represented by FlowPipeline class. Its purpose is keeping the list of active aggregates with corresponding identifiers. Within the class there are implemented methods for searching based on an identifier or matched header fields. This enables matching a packet received by the controller to the correct aggregate.

All entries are stored in one table of the switch. When defining a new aggregate an corresponding entry of the aggregate is added proactively to the flow table. The output port indicated in action for the created aggregate is determined in result of operation of static optimisation algorithms in advance with respect to time windows, for which the routing policies are being prepared. The created entry comprises parameters "cookie" and "priority" generated based on the unique identifier of the aggregate:

$$priority = aggregate\_id * 100$$

$$cookie = aggregate\_id * 100$$

Packets analysed in method handling OFPT_PACKET_IN events are assigned to an aggregate based on cookie parameter value, which allows to uniquely determine the aggregate identifier being searched. Based on the match found and the list of configured actions a detailed entry for the new flow is added to the flow table. The output port indicated in action for the created detailed entry is determined as a result of dynamic optimisation mechanisms. It is also possible to store in the controller more than one packet and to decide about the output port based on size or distribution of these packets. Parameters cookie and priority of the detailed entry are incremented by 10 with respect to the values present in the default entry of the aggregate. This way, with the use of priorities, the distribution of entries in groups corresponding to the associated aggregates is obtained.

An additional improvement present in hardware switches is the possibility of storing entries in TCAM memory, allowing for unusually quick matching of packets. Usually it is used for storing the first of the available tables, which can store from a few hundred to between ten and twenty thousands of entries. Off-the-shelf TCAM memory modules are capable of performing over a million searches per second, and the effective time of packet classification reaches values of the order of nanoseconds or less than a nanosecond, what makes it negligible in comparison to the time of operation of other mechanisms, which include inter alia queuing or header analysis. Because of a significant improvement of performance when using a table stored in TCAM memory, but also its limited capacity, an important matter is the choice between locating an entry in TCAM, or in less efficient memory of other type. The capacity of TCAM memory is limited, and increasing it involves an increased risk of failure. Therefore, the reduced memory usage due to the application of the method according to the invention additionally results in the increase of performance of the network, because smaller flow tables are more easily fit in the memory.

Matching of entries matching can be accelerated by partition of flow table into a greater number of tables 12b, 12c, as shown in Fig. 4. Each packet is handled in at least two tables. Distribution of entries and steps of processing received packets are depicted schematically in Fig. 4. In the moment of reception packet P1 is compared with entries of aggregates A, B, ... in the default table 12b of the switch. Each of these two entries comprises OFPIT_GOTO_TABLE instruction causing transfer of packet to processing in table 12c storing detailed entries comprised in the given aggregate according to the method of the invention. This is an auxiliary table associated with the aggregated entry. As a result of matching to aggregate A the packet is compared to entries A.1, A.2,... comprised in the auxiliary table 12c for the given aggregated entry. Because packet P1 is not matched by any of the entries it is handled according to the default action defined in the entry having the lowest priority in the auxiliary table 12c for the given aggregate, i.e. TABLE MISS - in this example it is sent to the output port determined proactively in result of operation of static optimisation algorithms, and simultaneously forwarded to the controller 11a. Thus, the aforementioned method of simultaneous handling and forwarding a packet to the control layer is used. The controller 11a selects an action for the new flow and adds the detailed entry A.3 in a proper table as a result of reactive action based on dynamic optimisation algorithms. Packets P2, P3 and the subsequent ones are processed analogously and matched to the new entry A.3. The action assigned thereto is immediately applied for the packet without the need of additional communication with the controller. Actions assigned to the new entry can indicate any output port defined reactively based on dynamic optimisation. This way it is possible to modify the default method of handling new flow without interference to the already handled flows. Table 12b comprising aggregated entries during matching a packet to an entry can be treated as an index to table 12c comprising detailed entries, and thereby accelerate searching. Further, partition of entries into groups distributed in distinct tables help to manage them.

In the implementation of this embodiment of the method according to the invention for the purpose of adding an aggregate a unique identifier is generated, which also is the number of the table 12c comprising detailed entries related to flows from a given group corresponding to the aggregated entry. An entry directing all packets belonging to the given aggregate to a proper auxiliary table 12c is added to table 12b of the switch. In the auxiliary table 12c the lowest priority TABLE MISS type entry is inserted, which applies the default action of the aggregate to the packet and at the same time forwards it to the controller 11a. The default action of the aggregated entry is thus determined proactively, based on static optimisation mechanisms. After reception of a packet in method handling OFPT_PACKET_IN events the number of the table, where the packet initially got to, is read from the message. On this basis the proper aggregate for the packet is found, and a detailed entry related to the new flow is inserted into the table with the same number. The output port indicated in the action for the created detailed entry is determined as a result of dynamic optimisation. It is also possible to store more than one packet in the controller 11a, and decide about the output port based on size or distribution of these packets.

A significant advantage of the presented invention is the possibility of modification of the policy of handling flows without interference with already existing flows. The method according to the invention allows to effectively manage the contents of the flow table and eliminate the latency of handling the first packets of the new flow imposed by waiting for the controller to create a new entry. SDN according to the invention in typical conditions operates faster and more reliably than the state-of-the-art networks. Defining aggregated flows with a default action based on optimisation algorithms and simultaneous forwarding first packets of a new flow to the controller 11a for reactive installation of detailed entries based on dynamic optimisation mechanisms provides profits of both proactive and reactive packet handling. Therefore, packets are handled in the expected way without waiting for the response of the controller 11a. It is possible because of cyclic operation, i.e. time is divided into intervals - time windows, and development of proactive traffic methods for future time windows is done in advance. Periodic operation involves prediction mechanisms estimating network load in future time windows. Next, these predictions are used by static optimisation algorithms during preparation of proactive rules. Additionally, the input data include the current network load and information originating from external applications.

The information about network load are obtained using dedicated mechanisms in OpenFlow protocol, i.e. through querying the switch about statistics of individual flows matched by the entries installed in flow tables. Additionally, the tool sFlow can be used, wherein an external, with respect to the SDN controller, monitor instance acquiring information about flows based on packets sampled by network devices. Both mechanisms of acquiring information about network load are realized with minimization of the related signalling congestion.

The information about network load are used by prediction and optimisation - both static, and dynamic. Prediction stores results of measurements in a database and on their basis estimates the network load in the next time windows. The results of the prediction are provided to static optimisation mechanisms, along with information about the current network load. This way the optimisation algorithm prepares routing policies. The dynamic optimisation uses information about current network load while deciding about handling new flows, i.e. an action related to detailed entries. In case of detection of congestion in an area of the network, dynamic optimisation can therefore provide mechanisms to counteract undesired scenarios, directing traffic through other areas of the network.

In the static optimisation used in the invention the need to take into account a number of Key Performance Indicators (KPI) implies the formulation of a multi-criteria optimisation problem. Additionally, taking into account the energy issues forces usage of binary variables. Both these factors make the problem difficult to solve with accurate methods. However, other solutions of such problems are known in the state-of-the-art, and can be matched for this task.

Below an approach to the problem of optimisation is described, it performs particularly well and made the solution meeting requirements in all tested types of traffic. The problem has been described by means of node-link type formulation - M. Pióro and D. Medhi, Routing, Flow, and Capacity Design in Communication and Computer Networks. San Francisco, CA, USA: Morgan Kaufmann Publishers Inc., July 2004. The objective function comprises five criterions associated with weights to allow the SDN operator to apply custom priorities and preferences. The criterions taken into account are: energy consumption, sum of delays on all network links, the maximal delay among all the network links, total utilization of resources for all network links, the maximal utilization of resources among all the network links. The weighted sum of these indices is subjected to minimization.

Formulation of the optimisation problem includes constraints described below. The fundamental constraint for formulating a node-link type problem forces that for a particular request the difference between the incoming and the outgoing traffic was equal to zero for intermediate nodes, and that for end nodes it corresponds to the request size, up to sign. The next constraint forces load on each individual network link allowing to realize all requests, the values of load of all network links are then summed in order to find the total value. Utilization percentage of the links is calculated as the fraction of the used throughput in relation to the total available link throughput, also the maximal value of the utilization percentage of the link among all the networks links is determined. The next constraint is related to calculating parameters of linear approximation of the function of packet delay in the form of increasing convex function of link load. A linear approximation with segments of this function based on queue model M/M/1 is used here. The next two constraints are related to total and maximal delay, the values are calculated with the use of the previous function. The next constraint forces link activation in case when any traffic is transmitted through it, and the last constraint provides calculation of total cost related to used energy.

For solving multi-criteria problems with binary variables the Lagrange decomposition method was used, described in publication of J. Karkazis, "Facilities location in a competitive environment: A promethee based multiple criteria analysis," European Journal of Operational Research, vol. 42, no. 3, pp. 294 - 304, Oct. 1989. An optional improvement comprises using ergodic sequences, also known as: volume algorithm, described in publications:

- E. Gustavsson, M. Patriksson, and A.-B. Strömberg, "Primal convergence from dual subgradient methods for convex optimization," Mathematical Programming, vol. 150, no. 2, pp. 365-390, May 2015.

and

- F. Barahona and F. A. Chudak, "Near-optimal solutions to large-scale facility location problems," Discrete Optimization, vol. 2, no. 1, pp. 35 - 50, Mar. 2005.

An additional improvement of performance of the invention can be obtained by adapting and static optimisation of the length of time windows, in which static optimisation is performed periodically to prepare routing policies for the next window. For example, in case of prediction of network traffic in a company having strictly defined working hours, an 8-hour window starting with the beginning of a shift is the most appropriate one, while in case of flexible working hours the working time should be partitioned into three 4-hour windows: the first one related to arrivals of employees at their place of work, the second one related to the time when most of the employees are in the office, and the third one related to the employees leaving the office.

A different pattern of changes in network flows relates to night-time activity in network areas connecting office buildings, data centres, and residential housings. The length of time windows should take into account the existence of night shifts, for which more suitable are 4-hour windows or lack of them, which causes that can 8-hour windows should be used. Also in case of data centres the time windows should be shortened from 8 to 4 hours in case of activity of the data centre users, and to 2 hours in case of occurrence of periodical maintenance resulting in increased network activity.

In case of households, different types of settlements are characterised by various synchronization in context of stopping the Internet activity. In non-urbanized regions 6-hours windows are suitable, while in highly urbanized areas 4-hour windows are more appropriate.

Adaptation of suitable length of time windows according to the invention is performed based on conducted network measurements combined with network traffic prediction. Therefore, SDN dynamically adapts to activity of users using historic data.

Such an approach allows to detect periodic dependencies occurring periodically in defined days of week or month. It is also possible to use time windows having different length during single day.

If an elongated window occurs after a short one, it can result in situation in which there is insufficient time for optimisation. Thus, the windows should be grouped in pairs of possibly similar length and such that these pairs occur in possibly shortest intervals one after another. Then, by performing optimisation within these pairs the risk of having insufficient time for the optimisation process is minimized.

It should be noted that the embodiments described above are an illustration of the invention defined by the appended claims, the scope of which is not limited to those embodiments. A person skilled in the art will readily and routinely propose multiple other embodiments using various software and hardware components. A person skilled in the art will also readily propose other methods to define the optimisation process, as well as methods used to solve it.

The server 11 can be any digital machine, in particular a computer, personal computer, microcomputer, or digital signal processor, and the controller 11a can be a program comprising a set of instructions implementing SDN controller and executing the methods according to the invention. The program can be a function, procedure, a set of objects with methods, an applet, a servlet, source code, library or a sequence of instructions. The program can be stored in a data medias such as an optical disc, hard drive, magnetic disc or semiconductor, or in the form of encoded data loadable to the computer memory. A medium can also be a signal in wired or wireless computer network.

As used in the claims, the term "comprises", or its synonyms, followed by a list of elements denotes that the list is to be interpreted as non-exhausting, in a way not precluding using other, additional elements. Mentioning an element in singular form does not denote limitation to one element, the scope of the invention encompasses also solutions comprising sets of these elements.

## Claims

1. A method of handling packet flow in a Software-Defined Network, SDN, comprising a server (11) with a SDN controller (11a) and a SDN switch (12) with flow table (12a, 12b, 12c) comprising detailed entries (A.1, A.2, A.3, B.1, B.2, B.3, C.1) defining parameters required for assigning a packet to a data flow, and a field defining priority, wherein detailed entries are included in corresponding aggregated entries (A, B, C), which are prepared in advance to define routing policy before commencing flow handling in a time window of a predefined length, **characterized in that** the length of predefined window is at least two hours, the SDN controller (11a) acquires from the SDN switch (12) data related to flow statistics for entries installed in flow tables, while an incoming packet (P1) belonging to a new flow is forwarded to the SDN controller (11a), simultaneously being handled according to the corresponding aggregated entry, and the SDN controller (11a) defines, by means of a reactive mechanism, a new detailed entry corresponding to the flow, and proactively modifies the aggregated entries (A, B, C) intended to be used to define routing policy in the next time window, using static optimisation

of an objective function including weighted sum of criterions selected in a group including energy consumption, sum of delays on all network links, the maximal delay among all the network links, total utilization of resources for all network links, the maximal utilization of resources among all the network links, based on the data related to flow statistics, wherein the aggregated entries (A, B, C) have assigned lower priorities than detailed entries (A.1, A.2, A.3, B.1, B.2, B.3, C.1).

2. The method according to claim 1, **characterized in that** the SDN switch (12) comprises a first flow table (12b) comprising aggregated entries (A, B, C), and at least one auxiliary flow table (12c) comprising detailed entries (A.1, A.2, A.3).

3. The method according to claim 2, **characterized in that** the detailed entries (A.1, A.2, A.3) corresponding to the given aggregated entry (A) in the flow table (12b) are located in an auxiliary table (12c) corresponding to this aggregated entry, wherein the auxiliary table further comprises a default entry (TABLE_MISS).

4. The method according to claim 1, or 2, or 3, **characterized in that** historic data related to flow statistics in subsequent time windows are stored in server memory (11), and the length of the time window is subjected to optimisation in a distinct process, using said historic data.

5. The method according to claim 4, **characterized in that** the static optimisation of the flow table for a window having a defined length is performed in the closest preceding window of the same length.

6. A Software-Defined Network, SDN, comprising a server (11) with a controller (11a), and at least one SDN switch (12) with a flow table (12a, 12b, 12c), **characterized in that** the SDN controller (11a) is adapted for executing the method according to any of claims 1 to 5.

7. The Software-Defined Network, SDN according to claim 6, **characterized in that** flow table in the SDN switch (12) is stored in ternary content-addressable memory, TCAM memory.

8. A computer program product adapted for performing the function of a Software-Defined Network, SDN, controller (11a), **characterized in that** it comprises a set of instructions which loaded to the server memory (11) cause the execution of the method according to any of claims 1 to 5.

**Patentansprüche**

1. Verfahren zum Handling des Paketflusses in einem softwaredefinierten Netzwerk, wobei das SDN einen Server (11) mit einer SDN-Steuerung (11a) und einen SDN-Switch (12) mit einer Flusstabelle (12a, 12b, 12c) mit detaillierten Einträgen (A.1, A.2, A.3, B.1, B.2, B.2, B.3, C.1) umfasst, die Parameter definieren, die für die Zuordnung eines Pakets zu einem Datenfluss erforderlich sind, und ein Priorität definierendes Feld, wobei detaillierte Einträge in entsprechenden aggregierten Einträgen (A, B, C) enthalten sind, die vor Beginn des Flusshandlings in einem Zeitfenster einer vordefinierten Länge vorbereitet werden, **dadurch gekennzeichnet, dass** die Länge des vordefinierten Fensters mindestens zwei Stunden beträgt, die SDN-Steuerung (11a) von dem SDN-Switch (12) Daten in Bezug auf die Flussstatistik für Einträge, die in Flusstabellen installiert sind, erfasst, während ein ankommendes Paket (P1), das zu einem neuen Fluss gehört, an die SDN-Steuerung (11a) weitergeleitet wird, gleichzeitig gemäß dem entsprechenden aggregierten Eintrag behandelt wird, und die SDN-Steuerung (11a) mittels eines reaktiven Mechanismus einen neuen, dem Fluss entsprechenden detaillierten Eintrag definiert, und proaktiv die aggregierten Einträge (A, B, C) modifiziert, die für die Verwendung in dem nächsten Zeitfenster vorgesehen sind, unter Verwendung statischer Optimierung einer Zielfunktion, die die gewichtete Summe von Kriterien beinhaltet, die in einer Gruppe ausgewählt wurden, die den Energieverbrauch, die Summe der Verzögerungen auf allen Netzwerkverbindungen, die maximale Verzögerung zwischen allen Netzwerkverbindungen, die Gesamtauslastung der Ressourcen für alle Netzwerkverbindungen, die maximale Auslastung der Ressourcen unter allen Netzwerkverbindungen umfasst, basierend auf den Daten der Flussstatistik, wobei die aggregierten Einträge (A, B, C) niedrigere Prioritäten zugewiesen haben als detaillierte Einträge (A.1, A.2, A.3, B.1, B.2, B.2, B.3, C.1).

**2.** Verfahren nach Anspruch 1, **dadurch gekennzeichnet, dass** der SDN-Switch (12) eine erste Flusstabelle (12b) mit aggregierten Einträgen (A, B, C) und mindestens eine Hilfsflusstabelle (12c) mit detaillierten Einträgen (A.1, A.2, A.3) umfasst.

**3.** Verfahren nach Anspruch 2, **dadurch gekennzeichnet, dass** die detaillierten Einträge (A.1, A.2, A.3), die dem gegebenen aggregierten Eintrag (A) in der Flusstabelle (12b) entsprechen, in einer Hilfstabelle (12c) liegen, die diesem aggregierten Eintrag entspricht, wobei die Hilfstabelle ferner einen Standardeintrag (TABLE_MISS) umfasst.

**4.** Verfahren nach Anspruch 1 oder 2 oder 3, **dadurch gekennzeichnet, dass** historische Daten, die sich auf Flussstatistiken in nachfolgenden Zeitfenstern beziehen, im Serverspeicher (11) gespeichert werden und die Länge des Zeitfensters in einem separaten Prozess unter Verwendung der historischen Daten einer Optimierung unterzogen wird.

**5.** Verfahren nach Anspruch 4, **dadurch gekennzeichnet, dass** die statische Optimierung der Flusstabelle für ein Fenster mit definierter Länge in dem nächstgelegenen vorhergehenden Fenster mit gleicher Länge durchgeführt wird.

**6.** Softwaredefiniertes Netzwerk, SDN umfassend einen Server (11) mit einer Steuerung (11a), und mindestens einen SDN-Switch (12) mit einer Flusstabelle (12a, 12b, 12c), **dadurch gekennzeichnet, dass** die SDN-Steuerung (11a) zum Ausführen des Verfahrens nach einem der Ansprüche 1 bis 5 angepasst ist.

**7.** Softwaredefiniertes Netzwerk, SDN nach Anspruch 6, **dadurch gekennzeichnet, dass** die Flusstabelle in dem SDN-Switch (12) in einem ternären inhaltsadressierbaren Speicher, TCAM-Speicher, gespeichert ist.

**8.** Computerprogrammprodukt, das zum Ausführen der Funktion einer SDN-Steuerung (11a) angepasst ist, **dadurch gekennzeichnet, dass** es einen Satz von Anweisungen umfasst, die in den Serverspeicher (11) geladen werden und die Ausführung des Verfahrens nach einem der Ansprüche 1 bis 5 bewirken.

**Revendications**

**1.** Procédé de gestion de flux de paquets dans un réseau à définition de logiciel, SDN, comprenant un serveur (11) avec un contrôleur de SDN (11a) et un commutateur de SDN (12) avec une table de flux (12a, 12b, 12c) qui comprend des entrées détaillées (A.1, A.2, A.3, B.1, B.2, B.3, C.1) qui définissent des paramètres qui sont requis pour attribuer un paquet à un flux de données, et une zone de définition de priorité, dans lequel des entrées détaillées sont incluses dans des entrées agrégées correspondantes (A, B, C), lesquelles sont préparées à l'avance pour définir une politique de routage avant de commencer une gestion de flux dans une fenêtre temporelle d'une longueur prédéfinie, **caractérisé en ce que** :
la longueur de fenêtre prédéfinie est d'au moins deux heures ; le contrôleur de SDN (11a) acquiert, en provenance du commutateur de SDN (12), des données qui sont rapportées à des statistiques de flux pour des entrées qui sont installées dans des tables de flux, tandis qu'un paquet arrivant (P1) qui appartient à un nouveau flux est transféré au contrôleur de SDN (11a), simultanément à sa gestion conformément à l'entrée agrégée correspondante, et le contrôleur de SDN (11a) définit, au moyen d'un mécanisme réactif, une nouvelle entrée détaillée qui correspond au flux, et il modifie de façon proactive les entrées agrégées (A, B, C) qui sont destinées à être utilisées pour définir une politique de routage dans la fenêtre temporelle suivante, en utilisant une optimisation statique d'une fonction d'objectif qui inclut une somme pondérée de critères qui sont sélectionnés dans un groupe qui inclut la consommation d'énergie, la somme de retards sur toutes les liaisons de réseau, le retard maximum au sein de toutes les liaisons de réseau, l'utilisation totale de ressources pour toutes les liaisons de réseau, l'utilisation maximum de ressources au sein de toutes les liaisons de réseau, sur la base des données qui sont rapportées à des statistiques de flux, dans lequel les entrées agrégées (A, B, C) se voient attribuer des priorités plus faibles que les entrées détaillées (A.1, A.2, A.3, B.1, B.2, B.3, C.1).

**2.** Procédé selon la revendication 1, **caractérisé en ce que** le commutateur de SDN (12) comprend une première table de flux (12b) qui comprend des entrées agrégées (A, B, C), et au moins une table de flux auxiliaire (12c) qui comprend des entrées détaillées (A.1, A.2, A.3).

**3.** Procédé selon la revendication 2, **caractérisé en ce que** les entrées détaillées (A.1, A.2, A.3) qui correspondent à l'entrée agrégée donnée (A) dans la table de flux (12b) sont localisées dans une table auxiliaire (12c) qui correspond à cette entrée agrégée, dans lequel la table auxiliaire comprend en outre une entrée par défaut (TABLE_MISS).

**4.** Procédé selon la revendication 1, ou 2, ou 3, **caractérisé en ce que** des données historiques qui sont rapportées à des statistiques de flux dans des fenêtres temporelles subséquentes sont stockées dans une mémoire de serveur (11), et la longueur de la fenêtre temporelle est soumise à optimisation au niveau d'un processus distinct, en utilisant lesdites données historiques.

**5.** Procédé selon la revendication 4, **caractérisé en ce que** l'optimisation statique de la table de flux pour une fenêtre qui présente une longueur définie est réalisée dans la fenêtre précédente la plus proche de la même longueur.

**6.** Réseau à définition de logiciel, SDN, comprenant un serveur (11) avec un contrôleur (11a), et au moins un commutateur de SDN (12) avec une table de flux (12a, 12b, 12c), **caractérisé en ce que** le contrôleur de SDN (11a) est adapté pour exécuter le procédé selon l'une quelconque des revendications 1 à 5.

**7.** Réseau à définition de logiciel, SDN, selon la revendication 6, **caractérisé en ce qu'**une table de flux dans le commutateur de SDN (12) est stockée dans une mémoire associative ternaire, TCAM.

**8.** Produit programme d'ordinateur adapté pour réaliser la fonction d'un contrôleur de réseau à définition de logiciel, SDN, (11a), **caractérisé en ce qu'**il comprend un jeu d'instructions qui, chargées sur la mémoire de serveur (11), déclenchent l'exécution du procédé selon l'une quelconque des revendications 1 à 5.

Fig. 1

Fig. 2

Fig. 3

Fig. 4

## REFERENCES CITED IN THE DESCRIPTION

### Patent documents cited in the description

- US 8964751 B
- EP 3175582 B1
- EP 3175582 A

### Non-patent literature cited in the description

- **TROIS CELIO et al.** A Survey on SDN Programming Languages: Toward a Taxonomy. *IEEE COMMUNICATIONS SURVEYS & TUTORIALS,* vol. 18 (4), 2687-2712
- **M. PIÓRO ; D. MEDHI.** Routing, Flow, and Capacity Design in Communication and Computer Networks. Morgan Kaufmann Publishers Inc, July 2004
- **J. KARKAZIS.** Facilities location in a competitive environment: A promethee based multiple criteria analysis. *European Journal of Operational Research,* October 1989, vol. 42 (3), 294-304
- **E. GUSTAVSSON ; M. PATRIKSSON ; A.-B. STRÖMBERG.** Primal convergence from dual subgradient methods for convex optimization. *Mathematical Programming,* May 2015, vol. 150 (2), 365-390
- **F. BARAHONA ; F. A. CHUDAK.** Near-optimal solutions to large-scale facility location problems. *Discrete Optimization,* March 2005, vol. 2 (1), 35-50